# EUROPEAN PATENT SPECIFICATION

(11) **EP 1 671 906 B1**
(45) Date of publication and mention of the grant of the patent: **15.07.2009**
(21) Application number: 05027336.6
(22) Date of filing: 14.12.2005
(51) Int. Cl.: B65G 47/91

(54) **Negative-pressure valve to be used in a gripping device for panels**
Unterdruckventil zur Verwendung in einer Greifervorrichtung für Platten
Soupape de pression negative à utiliser dans un dispositif de préhension pour panneaux

(30) Priority: 20.12.2004 IT MI20042428
(43) Date of publication of application: 21.06.2006
(73) Proprietor: Mazzucchelli, Giacobbe, 20020 Misinto MI (IT)
(72) Inventor: Mazzucchelli, Giacobbe, 20020 Misinto MI (IT)
(74) Representative: Cicogna, Franco

(56) References cited:
- DE-A1- 3 810 989
- DE-U1- 20 209 985
- FR-A- 2 709 478
- SU-A1- 650 776
- US-A- 2 753 181
- US-A- 3 307 819

## Description

### BACKGROUND OF THE INVENTION

The present invention relates to a negative-pressure valve device, specifically for application to general purpose gripping panels, according to the preamble of claim 1, and a gripping panel according to the preamble of claim 3.

It is known, for handling different articles, to use gripping flat panels, comprising a plurality of suction cup suction points.

To allow the raising system to properly operate, it is required that all the suction cups thereof are engaged by the article or articles to be raised, i.e. that the unengaged suction cups are closed to prevent losses susceptible to reduce the negative pressure in the engaged suction cups.

For achieving the above, very complex valving mechanisms are used, for closing or insulating the unengaged suction cups; however, it should be self evident that the designing and making of these systems are very complex and expensive. Such a negative-pressure valve device comprising the features of the preamble of claim 1 is disclosed in US-A-3 307 819. Changing the washers or suction cups is a slow, time consuming process.

Moreover, such a gripping mechanism is not suitable for raising simultaneously a plurality of different articles or objects.

### SUMMARY OF THE INVENTION

Accordingly, the aim of the present invention is to provide such a valving device, for application to general purpose gripping panels, which is very simple construction-wise fast changing and inexpensive.

Within the scope of the above mentioned aim, a main object of the invention is to provide such a negative-pressure valve device which is adapted to reduce the power to be used for holding in said device a sufficient negative pressure level.

Yet another object of the present invention is to provide such a valve device which is very reliable in operation and has very high safety characteristics.

According to one aspect of the present invention, the above mentioned aim and objects, as well as yet other objects, which will become more apparent hereinafter, are achieved by a negative-pressure valve device, for application to a suction cup gripping panel according to claim 1 and a gripping panel comprising a plurality of ajoining such valve devices according to claim 3.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative, but not limitative, example, in the accompanying drawings, where:

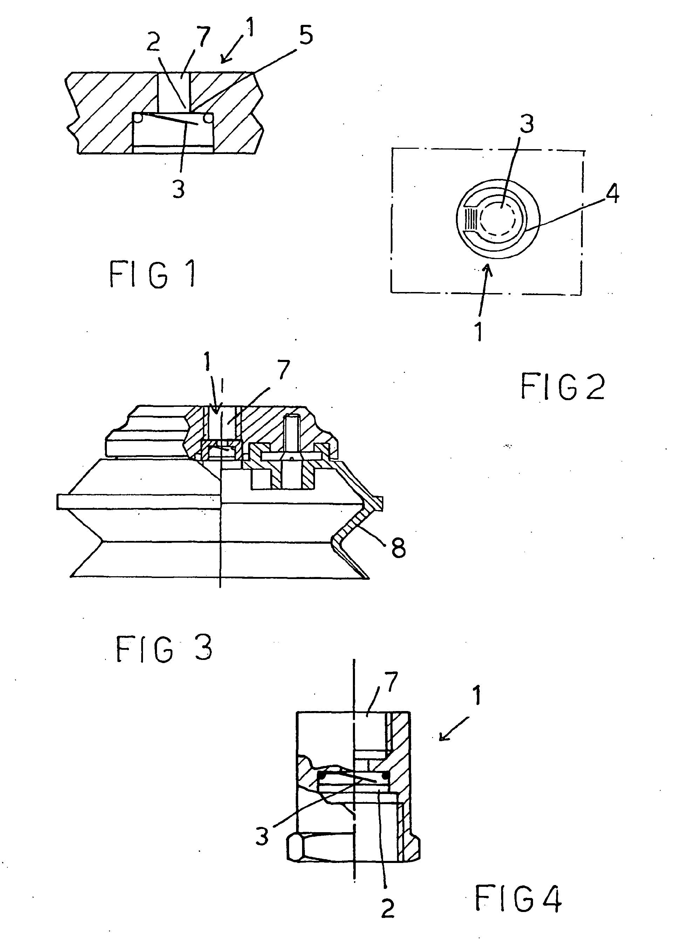

Figure 1 is a schematic elevation view, in cross section, of a valve device according to the present invention;
Figure 2 is a top plan view of the valve device;
Figure 3 is a further elevation view, as partially cross-sectioned, of the device applied to a suction cup construction;
Figure 4 is a detail view, as partially cross-sectioned, of the valve device;
Figure 5 is a further side view, in cross section, of a general purpose gripping panel, including valve devices, and shown in an operating step thereof in which said gripping panel is moved toward an article or object to be raised;
Figure 6 is a further side elevation view, similar to the preceding view, but illustrating the gripping panel during an operating step thereof for gripping the article or object;
Figure 7 is a view similar to figure 6, but illustrating the gripping panel releasing the gripped article or object;
Figure 8 schematically illustrates that the gripping plane, including the valve devices, can assume any desired space position;
Figure 9 is a side cross-sectional view of a negative-pressure valve device according to the invention, and on an enlarged scale, of the negative-pressure chamber 10, including a bottom panel 21, having a Velcro® or other similar material, adapted to be affixed on the bottom surface of a suction cup supporting plate, to which the resilient flat springs or "clapets" are applied; and
Figure 10 is a further side cross-sectioned view, showing the above mentioned negative-pressure chamber which comprises a bottom panel 21, to which are applied said resilient clapets, and comprising a foamed rubber or like material elements also fixed by a Velcro® material to the bottom plate of the negative-pressure chamber.

### DESCRIPTION OF THE PREFERRED EMBODIMENTS

With reference to the number references of the above mentioned figures, the valve device, which has been generally indicated by the reference number 1, comprises, in a two-step cavity 2, a flat spring 3, having a size which depends on the size of the seat or recess 4 therefor.

The flat spring 3, which can also be conventionally called "clapet/resilient element" comprises, on a face thereof, an opening which can have a circular configuration or any other desired configurations.

As the clapet/resilient element 3 is deformed, it will bear on a coupling seat 5 therefor, to close the passage through the latter.

The closure of the clapet/resilient element 3 is obtained as the air flow, generated by a diffusion vacuum pump, passing through said cavity 2, has acquired a strength sufficient to deform said clapet/resilient element 3.

The power provided by the air flow is generated by the air kinetic energy, which, by impinging on a flat surface, generates a pressure which is transformed into a force.

Upon closing the clapet/resilient element, which is not a tight closure, in the chamber 7, between the diffusion vacuum pump and clapet/resilient element 3 a negative pressure holding said clapet/resilient element 3 in its closure position is generated.

The opening arranged through the clapet/resilient element 3 will hold a small air flow, to balance said clapet/resilient element 3 as the negative pressure holding it in its closure condition stops.

In this connection, it should be apparent that the above mentioned clapet/resilient element 3 is advantageously applied to a suction cup 8, either on a fitting or on a gripping surface or panel 9, having a plurality of passages 7, but with a single negative-pressure chamber 10.

In said negative-pressure chamber 10, a diffusion vacuum pump generates an air flow through the mentioned clapet/resilient elements 3, thereby causing the latter to close.

The closure of said clapet/resilient elements 3 provides, in turn, a high negative-pressure or vacuum condition, which can be properly used.

Actually, as an article or object 11 is arranged under the suction cup 8 or the latching chamber 9, the air flow passing through the clapet/resilient element 3 will be shut off.

Then, pressures will be balanced and the clapet/resilient element 3 opened, while providing a maximum negative pressure or vacuum on the article or object.

This opening causes the air flow rate to achieve a maximum value.

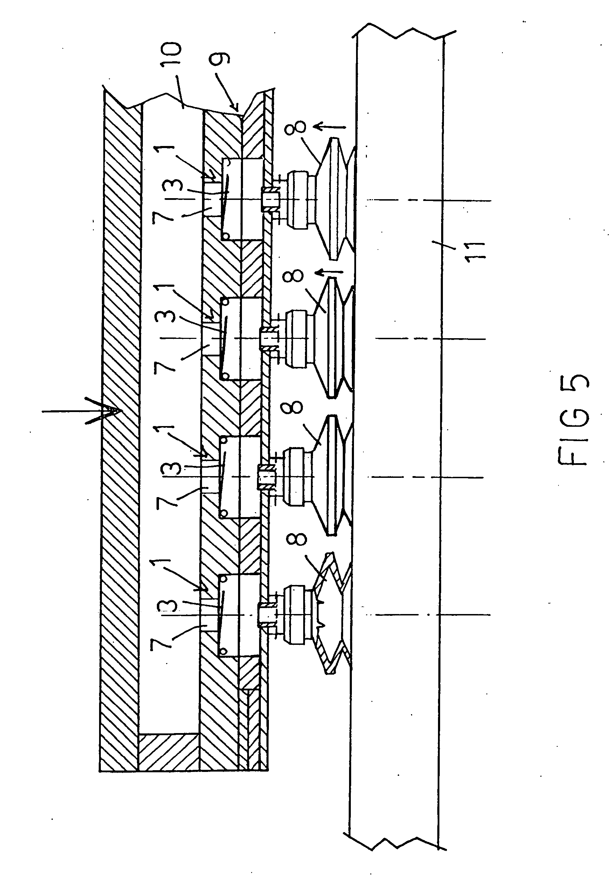

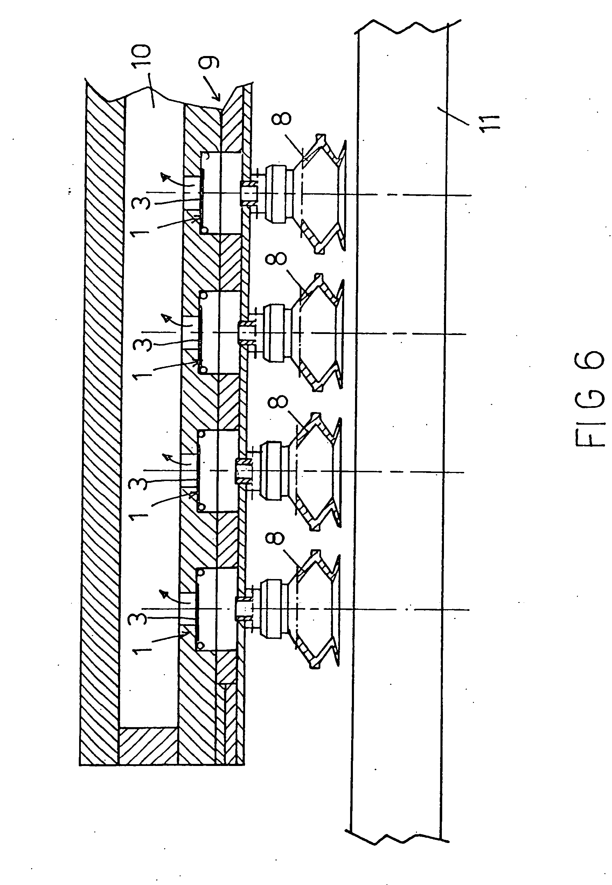

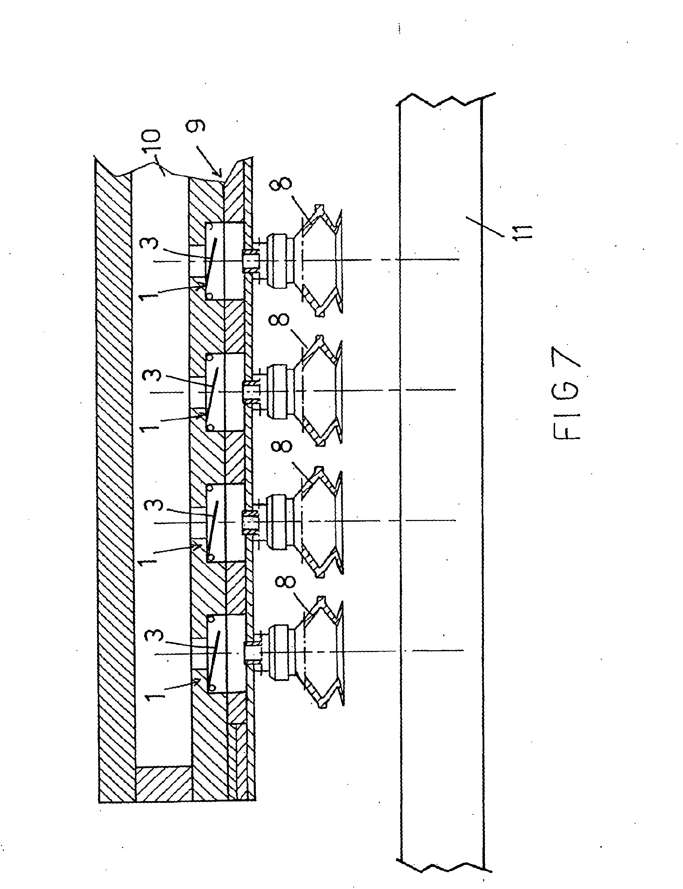

Consequently, by applying this valve means on a panel, as it is schematic shown in figures 5-7, a great energy amount will be saved, since only the clapet/resilient elements 3 covered by the articles 11 will be opened.

The other clapet/resilient elements 3, will be held in a closed condition, thereby preventing the negative pressure or vacuum level from decreasing.

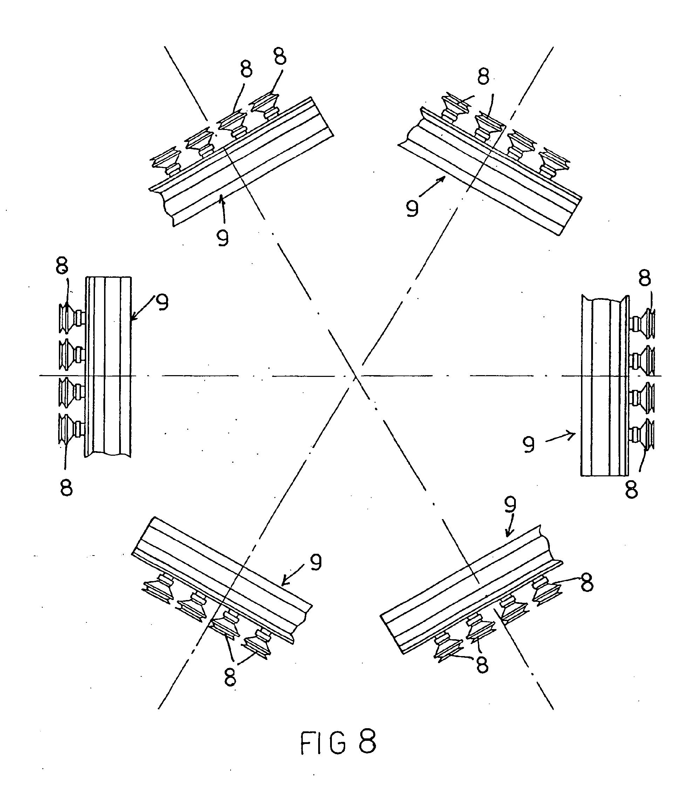

This gripping is achieved in all directions, i.e. both upward and downward and horizontally, as it is schematically shown, by way of an example, in figure 8.

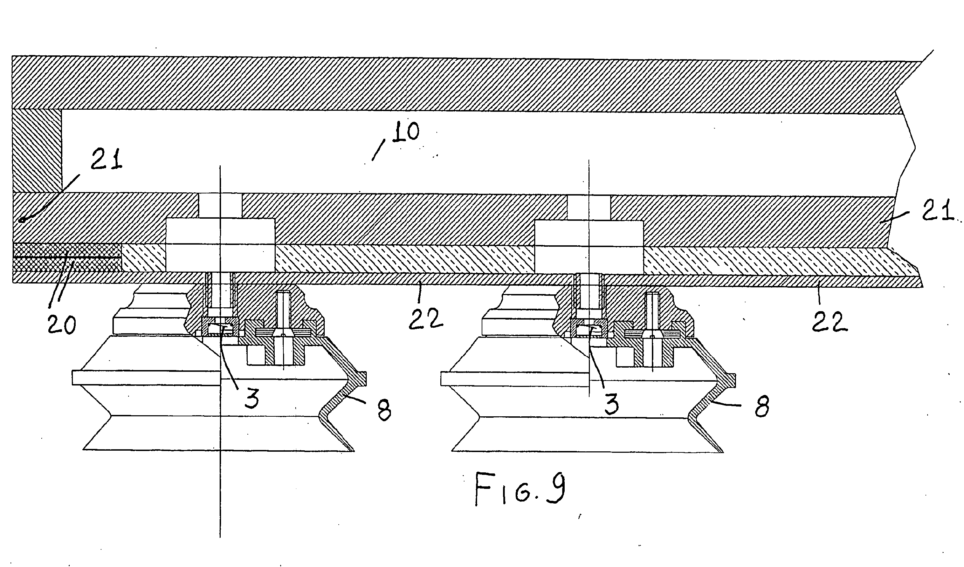

With reference to figure 9, is herein shown the negative pressure or vacuum chamber including a bottom surface, having a Velcro® strip .

Said gripping element is designed for fixing on a bottom surface or panel 21, a plate 22 supporting the suction cups 8 to which the mentioned clapet/resilient elements 3 are applied.

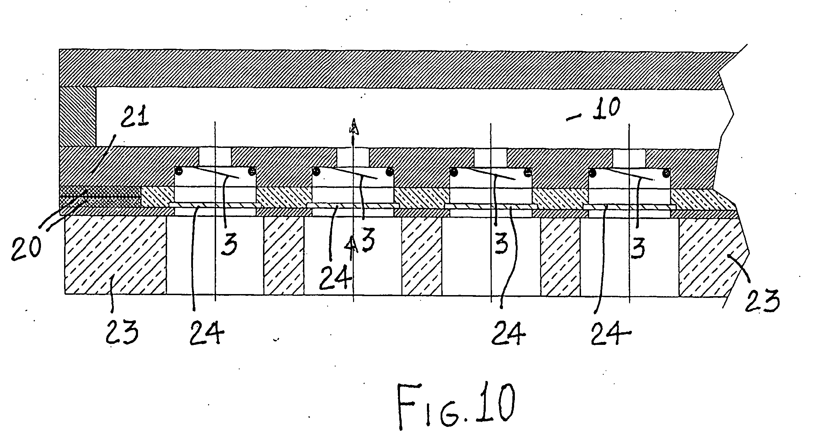

Figure 10 shows a modified embodiment of the above mentioned negative pressure or vacuum chamber 10, including a bottom surface or panel 21, in which the clapet/resilient elements 3 are engaged, and which is provided with a foamed rubber or the like material elements 23.

Figure 10 shows moreover filter elements 24 operating to protect the proper operation of the clapet/resilient elements 3.

It has been found that the invention fully achieves the intended aim and objects.

In fact, the invention provides a valve device, adapted to stably and safely grip an article or object, and having a very simple and unexpensive construction, both from a making and an operating standpoint.

In practicing the invention, the used materials, as well as the contingent size and shapes, can be any, depending on the requirements and status of the art, within the scope of the appended claims.

## Claims

1. A negative-pressure valve device (1), for application to a suction cup gripping panel, said gripping panel including a plurality of adjoining said valve devices (1), each said valve device (1) comprising a deformable flat spring (3), **characterized in that** whereby said flat spring is arranged in a seat (5) of a two-step cavity (2), said seat (5) having a passage therethrough to be closed by a deflection of said flat spring (3), caused by an air negative pressure through said cavity (2), that said flat spring (3) has a throughgoing opening for holding an air flow through said valve spring body to balance said flat spring as said negative-pressure stops, that said flat spring in a closure condition thereof, does not tightly close said seat (5), **characterized in that**, each said valve device is associated with a suction cup (8),
said flat spring (3) is applied to the suction cup on a fitting element or gripping plane having a plurality of passages but a single negative pressure chamber, whereby all said suction cups (8) are included in a suction cup plate (21) which is removably coupled to velcro® coupling means (20) associated with a bottom potion of said negative pressure chamber (10) .

2. A valve device, according to claim 1,
**characterized in that** said device further comprises filter elements (24) for protecting said flat spring

3. A gripping panel (9) for gripping articles (11) both upward, downward and horizontally, **characterized in that** said gripping panel comprises a plurality of adjoining valve devices (1) according to claim 1, all said valve devices (1) communicating, through a respective passage (7), with a single negative pressure chamber (10) arranged at the top of said valve devices (1) and that, as said gripping panel (9) engages said article (11), only said flat springs (3) covered by said article (11) are opened, whereas said flat springs not covered by said article (11) are held in a closed condition, to prevent a negative pressure level from decreasing.

## Patentansprüche

1. Unterdruckventilvorrichtung (1) zur Anwendung an einer Saugnapfgreiferplatte, wobei die Greiferplatte mehrere angrenzende Ventilvorrichtungen (1) beinhaltet, wobei jede Ventilvorrichtung (1) eine verformbare Blattfeder (3) umfasst, wobei die Blattfeder in einem Sitz (5) eines zweistufigen Hohlraums (2) angeordnet ist, wobei der Sitz (5) einen Durchgang zum Verschließen durch eine Durchbiegung der Blattfeder (3) aufweist, die durch einen Luftunterdruck durch den Hohlraum (2) bewirkt ist, wobei die Blattfeder (3) eine durchgehende Öffnung zum Halten eines Luftstroms durch den Ventilfederkörper zum Ausgleichen der Blattfeder, wenn der Unterdruck anhält, aufweist, wobei die Blattfeder in einer Verschlussposition davon den Sitz (5) nicht dicht schließt, **dadurch gekennzeichnet, dass**
jede der Ventilvorrichtungen einem Saugnapf (8) zugeordnet ist,
die Blattfeder (3) auf einem Anbringungselement oder einer Greiferfläche auf den Saugnapf angewendet ist, das bzw. die mehrere Durchgänge, jedoch eine einzige Unterdruckkammer aufweist, wobei die Saugnäpfe (8) alle in einer Saugnapfplatte (21) beinhaltet sind, die abnehmbar an Velcro®-Kupplungsmittel gekuppelt ist, die einem Bodenabschnitt der Unterdruckkammer (10) zugeordnet sind.

2. Ventilvorrichtung nach Anspruch 1, **dadurch gekennzeichnet, dass** die Vorrichtung ferner Filterelemente (24) zum Schützen der Blattfeder (3) umfasst.

3. Greiferplatte (9) zum Greifen von Gegenständen (11) aufwärts, abwärts sowie horizontal, **dadurch gekennzeichnet, dass** die Greiferplatte mehrere angrenzende Ventilvorrichtungen (1) nach Anspruch 1 umfasst, wobei die Ventilvorrichtungen (1) alle über einen jeweiligen Durchgang (7) mit einer einzigen Unterdruckkammer (10) in Verbindung stehen, die an der Oberseite der Ventilvorrichtungen (1) angeordnet ist, und dass, wenn die Greiferplatte (9) den Gegenstand (11) in Eingriff nimmt, nur die Blattfedern (3) die von dem Gegenstand (11) abgedeckt sind, geöffnet sind, während die Blattfedern, die nicht von dem Gegenstand (11) abgedeckt sind, in einem geschlossenen Zustand gehalten sind, um zu verhindern, dass ein Unterdruckpegel abnimmt.

## Revendications

1. Elément de valve à pression négative (1) destiné à l'application sur un panneau de préhension à ventouse, ledit panneau de préhension incluant une pluralité de dits éléments de valve (1) adjacents, chaque dit élément de valve (1) comprenant un ressort plat (3) déformable, grâce à quoi ledit ressort plat est agencé dans un siège (5) d'une cavité à deux étages (2), ledit siège (5) ayant un passage qui le traverse pour être fermé par un fléchissement dudit ressort plat (3), provoqué par une pression négative d'air dans l'ensemble de ladite cavité (2), grâce à quoi ledit ressort plat (3) présente une ouverture traversante permettant de maintenir un flux d'air à travers ledit corps de ressort de soupape afin d'équilibrer ledit ressort plat au moment où ladite pression négative s'arrête, grâce à quoi ledit ressort plat, dans un état fermé, ne ferme pas hermétiquement ledit siège (5), **caractérisé en ce que** chaque dit élément de valve est associé à une ventouse (8),
ledit ressort plat (3) est appliqué sur la ventouse sur un élément d'ajustement ou un plan de préhension ayant une pluralité de passages mais une seule chambre à pression négative, grâce à quoi toutes lesdites ventouses (8) sont incluses dans une plaque à ventouses (21) qui est couplée, de manière détachable, à un moyen (20) de couplage par Velcro® associé à une partie inférieure de ladite chambre à pression négative (10).

2. Elément de valve selon la revendication 1, **caractérisé en ce que** ledit élément comprend en outre des éléments de filtre (24) permettant de protéger ledit ressort plat (3).

3. Panneau de préhension (9) permettant de saisir des articles (11) à la fois vers le haut, vers le bas et horizontalement, **caractérisé en ce que** ledit panneau de préhension comprend une pluralité d'éléments de valve (1) adjacents, selon la revendication 1, tous lesdits éléments de valve (1) communiquant, à travers un passage (7) respectif, avec une seule chambre à pression négative (10) agencée dans la partie supérieure desdits éléments de valve (1) et **en ce que**, au moment où ledit panneau de préhension (9) s'engage sur ledit article (11), seuls lesdits ressorts plats (3) recouverts par ledit article (11) sont ouverts, alors que lesdits ressorts plats non recouverts par ledit article (11) sont maintenus à l'état fermé, afin d'empêcher un niveau de pression négative de diminuer.
